# FASCICULE DE BREVET EUROPEEN

(11) **EP 0 857 005 B1**
(45) Date de publication et mention de la délivrance du brevet: **25.10.2006**
(21) Numéro de dépôt: 98400200.6
(22) Date de dépôt: 30.01.1998
(51) Int. Cl.: H04Q 11/04

(54) **Procédé pour associer des données à des cellules ATM**
Verfahren zum Zuordnen von Daten zu ATM Zellen
Method for associating data information with ATM cells

(30) Priorité: 04.02.1997 FR 9701222
(43) Date de publication de la demande: 05.08.1998
(73) Titulaire: Ericsson France, 91300 Massy (FR)
(72) Inventeur: Ha-Duong, Tuan, 92160 Antony (FR); Bassham, Mark, 92340 Bourg La Reine (FR)
(74) Mandataire: Loisel, Bertrand

(56) Documents cités:
- EP-A- 0 600 683
- JAIN R: "A COMPARISON OF HASHING SCHEMES FOR ADDRESS LOOKUP IN COMPUTER NETWORKS" IEEE TRANSACTIONS ON COMMUNICATIONS, vol. 40, no. 10, 1 octobre 1992, pages 1570-1573, XP000331089

## Description

La présente invention concerne un procédé pour associer des données à des cellules ATM parvenant à un équipement de réseau ATM selon des connexions virtuelles.

On sait qu'en technologie ATM ("mode de transfert asynchrone"), il est établi des connexions virtuelles entre les équipements raccordés au réseau, au sein des liaisons physiques existant entre ces équipements. Chaque connexion virtuelle est désignée par un couple d'identificateurs qu'on retrouve dans des champs déterminés de l'en-tête de chaque cellule transmise suivant cette connexion virtuelle :
- un identificateur de conduit virtuel, ou VPI ("virtual path identifier"), qui désigne généralement des ressources allouées de façon semi-permanente ;
- un identificateur de voie virtuelle, ou VCI ("virtual channel identifier"), qui désigne des ressources allouées dynamiquement au sein des conduits virtuels.

Les équipements de commutation du réseau ATM réalisent l'acheminement de chaque paquet, ou cellule, sur la base de l'un ou l'autre (ou les deux) des identificateurs VPI-VCI lus dans son en-tête.

D'après les normes en vigueur (Recommandation UIT-T I.361), le VCI se compose de L_{c}=16 bits, et le VPI se compose de Lₚ=8 bits à une interface usager-réseau (UNI) et de Lₚ=12 bits à une interface de noeud de réseau (NNI). La Recommandation UIT-T I.361 impose encore, aux paragraphes 2.2.3 et 2.3.2, que :
- les bits utilisés du champ VPI soient contigus ;
- les bits utilisés du champ VPI soient les bits de poids le plus faible du champ VPI (à partir du bit 5 de l'octet 2 de l'en-tête de cellule) ;
- les bits utilisés du champ VCI soient contigus ;
- les bits utilisés du champ VCI soient les bits de poids le plus faible du champ VCI (à partir du bit 5 de l'octet 4 de l'en-tête de cellule) ;
- les bits non attribués, c'est-à-dire non utilisés par l'usager ou par le réseau dans le champ d'acheminement de 28 bits, soient mis à zéro.

Le codage des couples VPI-VCI autorise la différenciation de 2²⁸, soit plus de deux cent soixante millions de connexions virtuelles au sein de chaque liaison physique. Dans la pratique, les opérateurs n'utilisent qu'un nombre très inférieur de connexions virtuelles (typiquement de l'ordre de 4000).

Comme les cellules relevant des connexions virtuelles établies parviennent aléatoirement et à très grande cadence aux équipements du réseau, ceux-ci doivent être capables, sur la base des couples VPI-VCI lus dans l'en-tête des cellules, d'associer très rapidement des données à ces cellules afin d'adopter une réponse appropriée.

La façon la plus simple de le faire consisterait à utiliser une mémoire à accès aléatoire (RAM) stockant les données en question à des adresses déterminées par les couples VPI-VCI. Mais le coût de la mémoire avec un index de 28 bits serait prohibitif pour un rendement dérisoire alors que seulement quelques milliers de connexions virtuelles sont actives.

Une autre approche est d'utiliser une recherche dichotomique, nécessitant une boucle de recherche, dont le temps d'exécution est logarithmique en fonction du nombre d'enregistrements, dans une table où les enregistrements sont classés en ordre croissant ou décroissant des clés VPI-VCI. Dans le contexte d'un équipement de réseau ATM, cette approche nécessite une électronique extrêmement rapide.

Il est encore envisageable d'utiliser, comme dans EP-A-0 600 683, des mémoires associatives, ou adressables par le contenu (CAM). Cette solution a l'inconvénient d'être encombrante et très coûteuse.

Dans le domaine de la programmation d'ordinateurs, on utilise couramment une technique de hachage ("hashing") pour consulter rapidement des tables de traduction, comme par exemple pour les bases de données ou pour les compilateurs de langage (voir Knuth : "The Art of Computer Programming", Vol. 3, Addison-Wesley 1973, pages 506-542). Cette technique repose sur l'utilisation d'une fonction hachoir qui réduit aléatoirement la longue clé d'accès en un code plus court, appelé code H. Le but de cette fonction aléatoire est de répartir les codes H de façon régulière sur une plage réduite d'accès aléatoire. Un exemple de fonction utilisable, dérivé de la technique des codes cycliques, repose sur la division polynomiale (voir R. Jain : "A Comparison of Hashing Schemes for Address Lookup in Computer Networks", IEEE Trans. on Communications, Vol. 40, No. 10, octobre 1992, pages 1570-1573). Des conflits surviennent lorsqu'un même code H se trouve associé à plusieurs clés d'accès différentes. Ces conflits sont résolus par une procédure de recherche dans des chaînes secondaires de débordement, qui permet de conserver un très faible temps moyen d'exécution de la recherche. Mais comme noté dans l'ouvrage précité de Knuth (page 540), les méthodes de hachage ne sont efficaces qu'en moyenne, alors que le temps de recherche peut être très long dans des cas défavorables. Ceci est dû au fait que la durée d'une recherche dans les chaînes secondaires en cas de conflit n'est pas bornée. Ces méthodes paraissent donc inutilisables pour le problème de l'association en temps réel de données à des cellules ATM, puisque le temps d'exécution de la recherche doit rester inférieur à un temps de cellule pour que les spécifications de débit soient respectées.

Une but de la présente invention est de proposer un processus de recherche efficace et économique pour associer des données à des cellules ATM.

L'invention propose ainsi un procédé pour associer des données à des cellules ATM parvenant à un équipement de réseau ATM selon des connexions virtuelles. Le procédé comprend, à l'établissement de chacune des connexions virtuelles, l'adoption d'un couple d'identificateurs comportant un identificateur de conduit virtuel de Lₚ bits et un identificateur de voie virtuelle de L_{c} bits, et la mémorisation, dans une table de l'équipement, de données se rapportant à ladite connexion virtuelle en relation avec son couple d'identificateurs. Le procédé comprend d'autre part, à l'arrivée de chaque cellule ATM dont l'en-tête inclut le couple d'identificateurs de l'une des connexions virtuelles, la lecture dans la table de données se rapportant à ladite connexion virtuelle. Selon l'invention, la table comporte p.2^{m} zones de mémorisation organisées en 2^{m} lignes et p colonnes, m et p étant des entiers au moins égaux à 1, et les données se rapportant à une connexion virtuelle sont stockées dans une zone de la table dont la ligne est repérée par un index de m bits calculé par application d'un code cyclique systématique, dont le polynôme générateur est de degré m, à un mot binaire de L bits (L≤Lₚ+L_{c}) extrait d'une séquence de Lₚ+L_{c} bits constituée par les bits de l'un des identificateurs du couple adopté pour ladite connexion virtuelle, rangés en ordre de poids décroissants, suivis par les bits de l'autre identificateur dudit couple, rangés en ordre de poids croissants.

Le calcul de l'index au moyen d'un code cyclique systématique est comparable à une fonction hachoir. Toutefois, l'organisation à deux dimensions de la table permet de borner le temps d'exécution d'une recherche. Elle n'est pas organisée en table à débordement dynamique comme dans la technique logicielle de hachage. Si p couples VPI-VCI ayant le même index sont déjà actifs et si un (p+1)-ième couple VPI-VCI donnant lieu au même index se trouve être envisagé pour une nouvelle connexion virtuelle à établir, alors ce (p+1)-ième couple sera rejeté. Un dialogue approprié avec l'équipement situé à l'autre extrémité de la connexion virtuelle permettra alors le choix d'un autre couple. La probabilité d'occurrence d'un tel rejet peut être rendue très faible par un dimensionnement approprié de la table.

D'ailleurs, dans un grand nombre de cas, il ne se produira aucun conflit. L'ordonnancement des bits des identificateurs VPI et VCI fait qu'il suffit de prendre p=1 pour qu'aucun conflit ne survienne jusqu'à un nombre de connexions établies égal à 2^{m} lorsque l'attribution de ces identificateurs obéit aux règles énoncées aux paragraphes 2.2.3 et 2.3.2 de la Recommandation UIT-T I.361. Cette absence de conflits résulte des propriétés des codes cycliques.

La table pourra également comporter p=2^{s} colonnes, avec s≥1. Les données se rapportant à une connexion virtuelle peuvent alors être stockées sans risque de conflit (jusqu'à 2^{m+s} connexions si les règles de la Recommandation UIT-T I.361 sont respectées) dans une zone de la table dont la colonne est repérée par un index défini par s bits de positions déterminées du couple d'identificateurs de cette connexion. Ces *s* bits (typiquement s=1 ou 2) permettent de distinguer les ensembles de couples d'identificateurs gérés par les deux extrémités de la connexion.

Pour les cas où l'équipement serait installé dans un réseau comportant des équipements qui ne gèrent pas les VPI-VCI conformément à la norme, il peut toutefois rester intéressant de surdimensionner la table (p>1 ou p>2^{s}) de manière à rendre très faible le risque de conflits entre des couples VPI-VCI attribués aléatoirement. Ce surdimensionnement n'empêche pas de conserver une mémoire de taille raisonnable (quelques dizaines de milliers de zones de mémorisation au lieu de 2²⁸ dans les cas d'utilisation simple d'une mémoire RAM).

Des codes cycliques particulièrement avantageux pour le calcul des index de m bits sont les codes de Fire dont le polynôme générateur G(X) est de la forme G(X)=(1+X^{q}).P(X), où P(X) est un polynôme premier de degré r, et q et r sont des entiers plus grands que 0 tels que q+r=m et L+m n'est pas plus grand que le plus petit commun multiple (PPCM) de q et de 2^{r}-1.

En plus des propriétés ci-dessus, on évite alors tout risque de conflit si les bits utilisés pour différencier les VPI et VCI d'une même liaison physique sont compris dans deux plages mobiles respectives de L₁ bits et L₂ bits telles que L₁+L₂=q+1, L₁≤q, et L₁≤r.

D'autres particularités et avantages de la présente invention apparaîtront dans la description ci-après d'un exemple de réalisation non limitatif, en référence aux dessins annexés, dans lesquels :
- la figure 1 est un schéma synoptique de moyens employés pour mettre en oeuvre l'invention dans un commutateur ATM ;
- la figure 2 est un diagramme illustrant la structure de la table de stockage des données ;
- la figure 3 est un diagramme illustrant la construction des index de repérage de ligne à partir des couples VPI-VCI ; et
- la figure 4 montre des chronogrammes du fonctionnement des moyens de la figure 1.

Dans la description ci-dessous, on illustre l'invention dans un exemple d'application dans un commutateur ATM. On considère en particulier le cas où les données qu'il s'agit d'associer à chaque cellule ATM entrante consistent en une identité de connexion, notée Id_Cx, utilisée par le commutateur pour accomplir les tâches requises sur les cellules appartenant à une connexion virtuelle. Cette identité interne Id_Cx est insérée avant le contenu de la cellule ATM (en-tête + données) dans un format de "capsule" propre au commutateur, une capsule pouvant se composer de l'identité Id_Cx suivie par le contenu de la cellule.

Un exemple de commutateur ATM faisant appel à un tel format de capsule est décrit en détail dans EP-A-0 735 727.

L'identité interne Id_Cx sert de pointeur dans des tableaux de mémoire à accès aléatoire (RAM) du commutateur. Pour accomplir une fonction donnée sur une cellule (telle qu'acheminement dans des matrices de commutation, traduction de champs VPI-VCI, contrôle de débits par rapport aux débits-crête ou débits moyens négociés entre l'opérateur et les utilisateurs,...), le commutateur lit les paramètres pertinents (étiquettes d'acheminement, nouvelles valeurs des VPI-VCI, valeurs de débit négociées...) dans un des tableaux RAM à une adresse pointée par l'identité Id_Cx présente avant la cellule au début de la capsule. L'identité Id_Cx comporte beaucoup moins de bits que le couple VPI-VCI (par exemple 12 bits au lieu de 28 bits), de sorte que les tableaux RAM peuvent consister en des plans mémoire de taille courante et bon marché.

Bien entendu, il serait également possible que les données associées aux cellules conformément à l'invention consistent directement en les paramètres opératoires de l'équipement plutôt qu'en des pointeurs intermédiaires dans des tableaux RAM contenant ces paramètres, notamment si l'équipement dans lequel l'invention est mise en oeuvre est relativement peu complexe et ne nécessite donc pas un trop grand nombre de tels paramètres.

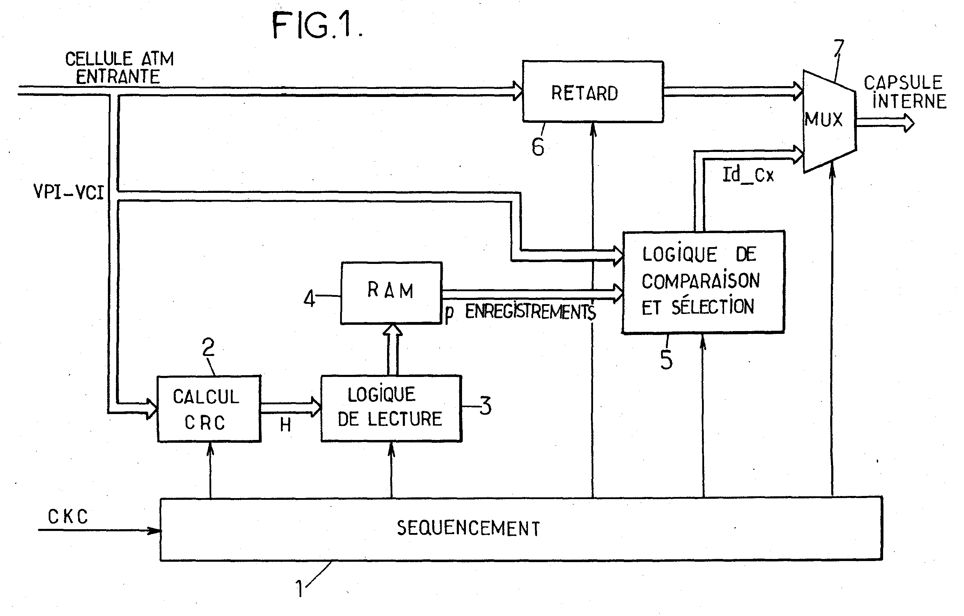

La figure 1 montre des moyens utilisables pour associer les identités Id_Cx à des cellules ATM à mesure qu'elles parviennent à un commutateur, et pour insérer ces identités au début des capsules correspondantes. Ces moyens sont supervisés par un module 1 de séquencement des opérations sous le contrôle du processeur central du commutateur. Ce module 1 reçoit le signal d'horloge-cellule CKC marquant les débuts des cellules parvenant successivement sur une liaison physique à l'entrée du commutateur, afin de déclencher les opérations requises en temps voulu. Les unités 2, 3, 4 et 5 produisent, à l'arrivée de chaque cellule, l'identité interne Id_Cx de la connexion dont relève cette cellule en un temps inférieur à la période du signal d'horloge CKC. Une unité 6 retarde d'un temps correspondant la cellule entrante, avant de la délivrer à un multiplexeur 7 dont l'autre entrée reçoit l'identité interne Id_Cx. Le multiplexeur 7 délivre la capsule constituée par la cellule précédée par l'identité associée selon le format interne du commutateur.

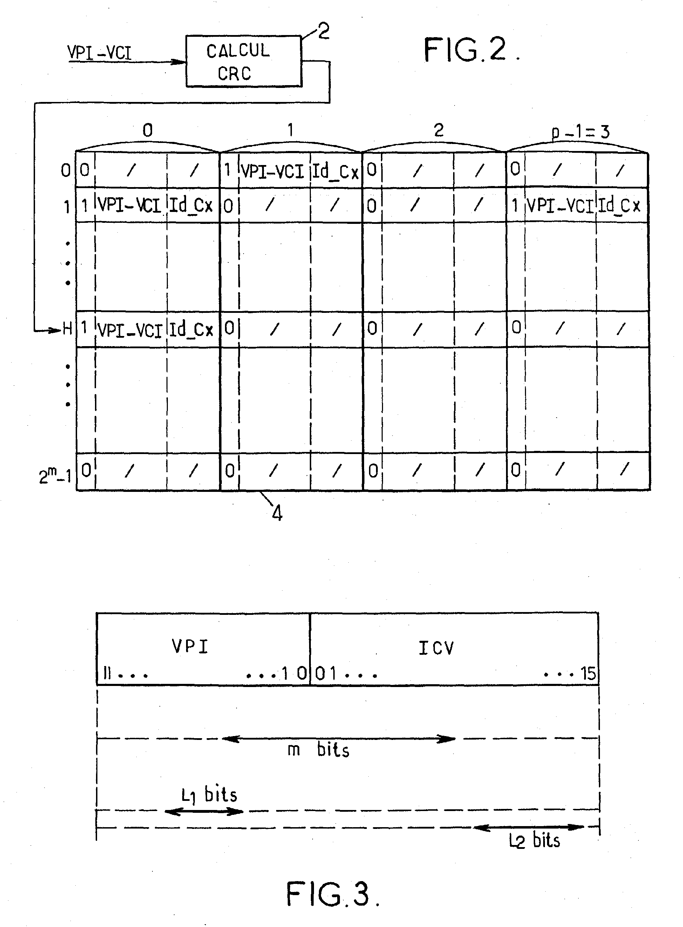

Les identités Id_Cx sont stockées en relation avec les couples VPI-VCI correspondants dans une unité de mémoire RAM 4 organisée selon une table à deux dimensions comme illustré sur la figure 2.

La table 4 comprend p.2^{m} zones de mémorisation organisées en 2^{m} lignes indexées de 0 à 2^{m}-1, et p colonnes indexées de 0 à p-1 (p=4 dans le cas particulier représenté sur la figure 2) . Chaque zone se compose de trois emplacements :
- le premier comporte un bit x indiquant par la valeur x=1 le fait que la zone contient un enregistrement valide, c'est-à-dire relatif à une connexion virtuelle établie, et par la valeur x=0 l'absence d'un tel enregistrement valide ;
- le second, de Lₚ+L_{c}=28 bits (cas d'une interface NNI), contient le couple d'identificateurs VPI-VCI désignant la connexion virtuelle si x=1 ;
- le troisième contient l'identité interne Id_Cx de la connexion virtuelle si x=1.

L'index H de la ligne de la table 4 comportant la zone où sont mémorisées les données relatives à une connexion virtuelle est obtenu par l'unité 2 sur la base du couple VPI-VCI de cette connexion, par un calcul de CRC ("cyclic redundancy checksum") ainsi qu'il est couramment utilisé dans le domaine du codage détecteur d'erreurs.

De façon classique (voir "Théorie et Technique de la Transmission de Données" par Clavier et al Editions Masson 1979), le codage cyclique systématique d'un mot binaire de L bits i_{L-1}i_{L-2}···i₁i₀, qu'on représente par un polynôme i(X)=i_{L-1}X^{L-1}+i_{L-2}X^{L-2}+...+i₁X+i₀ consiste à calculer le reste de la division euclidienne du polynôme X^{m}i(X) par un polynôme générateur G (X) de degré m, les additions s'entendant comme des opérations OU EXCLUSIF bit à bit. Les m coefficients binaires du polynôme-reste constituent le CRC qu'on utilise ici comme index de ligne H. De telles divisions euclidiennes sont réalisées de façon simple et très rapide par des circuits de calcul classiques à base de registres à décalage de m étages.

Suivant l'invention, le mot binaire soumis au codage cyclique se compose de L bits consécutifs extraits d'une séquence de Lₚ+L_{c} bits constituée par les bits de l'un des identificateurs du couple VPI-VCI, ranges en ordre de poids décroissants, suivis par les bits de l'autre identificateur du couple VPI-VCI, rangés en ordre de poids croissants. La figure 3 montre ainsi la séquence VPI-ICV, dont les Lₚ=12 premiers bits sont ceux du VPI en ordre de poids décroissants et les L_{c}=16 derniers bits sont ceux du VCI en ordre de poids croissants. On considère d'abord le cas où L=Lₚ+L_{c}, c'est-à-dire où l'ensemble de la séquence VPI-ICV est soumise au codage cyclique systématique.

Le mode de calcul des index de ligne H garantit que deux séquences VPI-ICV qui ne diffèrent que par des bits inclus dans une plage quelconque de m bits consécutifs ne donnent pas lieu au même index H. Ceci résulte d'une propriété bien connue des codes cycliques selon laquelle la transmission du CRC comme information redondante accolée au mot binaire de L bits permet de detecter des erreurs localisées dans une plage de longueur inférieure ou égale au degré du polynôme générateur G(X).

En conséquence, lorsque les couples VPI-VCI sont alloués aux connexions virtuelles conformément aux règles de la Recommandation UIT-T I.361 rappelées en introduction, on peut établir jusqu'à 2^{m} connexions différentes dont les données seront stockées dans des lignes différentes de la table 4.

S'il est spécifié que le commutateur doit supporter jusqu'à N connexions virtuelles, on peut alors dimensionner la table 4 de façon que 2^{m}≥N et p=1. Une autre possibilité est de dimensionner la table 4 de façon que p=2^{s} et 2^{m+s}≥N avec s≥1, s bits de positions prédéterminées de la séquence VPI-ICV servant alors d'index de la colonne comportant la zone de mémorisation concernée (le cas p=1 correspond à s=0). Si on a l'assurance que les VPI-VCI seront toujours alloués conformément à la norme, il n'est même pas nécessaire dans ce cas de prévoir dans les zones de mémorisation de la table 4 des emplacements pour recevoir le bit x et le couple VPI-VCI, puisqu'une adresse de lecture non ambiguë est produite par le calcul de CRC et, si s≥1, par le repérage des colonnes par les s bits d'indexage des colonnes.

La taille de la table 4 est imposée par le nombre potentiel de connexions et non par la longueur du champ VPI-VCI. On note que, grâce à la mobilité de la plage de m bits représentée sur la figure 3, l'absence de conflit est obtenue pour les liaisons physiques prévues pour supporter un assez grand nombre de conduits virtuels et relativement peu de voies virtuelles par conduit virtuel aussi bien que pour les liaisons physiques prévues pour supporter relativement peu de conduits virtuels et un assez grand nombre de voies virtuelles par conduit virtuel.

Si la présente invention tire parti des règles de la Recommandation I.361, il est avantageux de prévoir des adaptations permettant en outre le prise en compte de situations qui ne suivraient pas cette Recommandation. En effet, l'invention peut être mise en oeuvre avec des équipements antérieurs à ces règles. D'autre part, on ne peut pas exclure que ces règles soient modifiées ou rendues moins contraignantes dans le futur.

L'exemple mentionné ci-dessus, où L=Lₚ+L_{c}-s avec s≥1, permet ainsi de réserver s bits du couple VPI-VCI (par exemple le bit de poids le plus fort du VPI et/ou celui du VCI) pour discriminer les couples VPI-VCI gérés par l'une ou l'autre des extrémités de la connexion virtuelle. Les données se rapportant aux VPI-VCI gérés par chaque extrémité seront alors stockées dans des lignes différentes de la table 4.

Une autre adaptation, illustrée par les figures 1 et 2, consiste à prévoir dans la table 4 un nombre p de colonnes plus grand que le strict minimum, de manière à permettre la prise en compte efficace de situations où les VPI-VCI seraient alloués aléatoirement. Lorsqu'arrive au commutateur une cellule dont l'en-tête inclut un couple VPI-VCI, on calcule l'index de ligne, et on examine les différentes zones de la ligne pour trouver une zone dont le premier emplacement contient un bit x=1 et dont le second emplacement contient le couple VPI-VCI en question. L'identité interne Id_Cx pourra être lue dans cette zone.

La probabilité B(N,m,p) de débordement dans une ligne de la table 4, ou taux de blocage, est B(N,m,p)=1-Pr(0)-Pr (1) -...-Pr(p), où Pr(i) est la probabilité qu'un même index H soit utilisé i fois. Si les couples VPI-VCI sont choisis de façon indépendante de la structure du code cyclique employé pour calculer les index de ligne, la loi Pr(.) peut être approchée par une loi de Poisson, Pr(i)=e^{-a}(aⁱ/i!), où a=N/2^{m} est la densité d'utilisation des index H. Ainsi, si on prévoit p=6 colonnes dans la table 4, on peut accepter jusqu'à N=2^{m-1} connexions virtuelles avec un taux de blocage B(2^{m-1},m,6)≈0,0000010. Si le nombre de connexions virtuelles monte jusqu'à N=2^{m}, le taux de blocage reste très faible : B(2^{m},m,6)≈0,000083.

Lorsqu'un blocage se produit, cela peut être constaté dès l'établissement de la connexion virtuelle concernée. Le commutateur peut alors rejeter le choix du couple VPI-VCI, comme le permettent les protocoles de signalisation en ATM. Le commutateur choisit un autre couple ou, si la gestion des VPI-VCI est sous le contrôle de l'autre extrémité de la connexion, le commutateur lui notifie le rejet, ce qui conduit à un nouveau choix avec de nouveau une très faible probabilité de blocage.

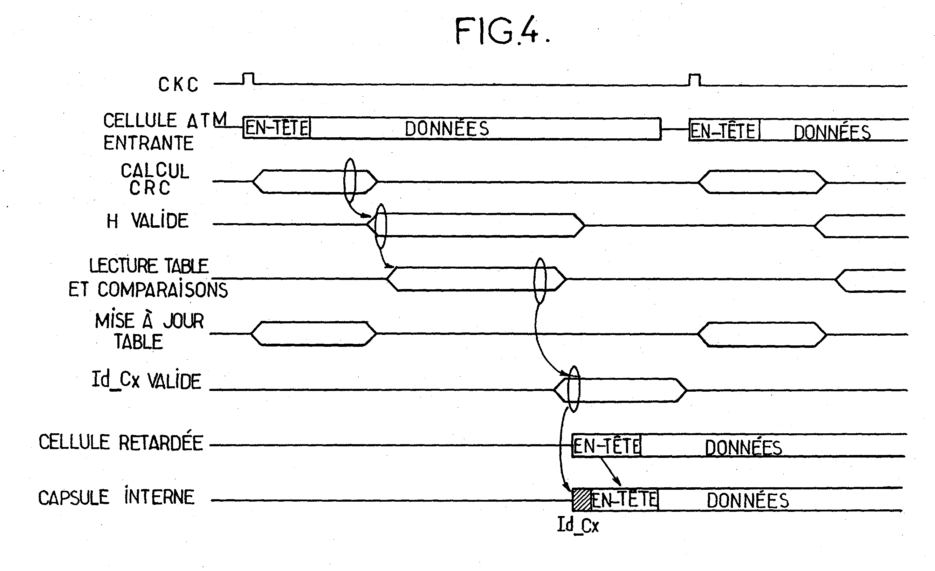

Dans l'exemple illustré sur la figure 1, l'unité 2 de calcul de CRC extrait l'identité VPI-VCI de l'en-tête de chaque cellule entrante sur une liaison physique du commutateur, et calcule l'index de ligne H sur la base de l'ensemble de la séquence VPI-ICV (L=Lₚ+L_{c}). Ceci correspond aux trois premières lignes de la figure 4. Cet index H est validé dans un registre d'une logique 3 de lecture de la mémoire RAM 4. Cette logique 3 est agencée pour que les enregistrements contenus dans les p zones de la ligne H soient présentés sur le port de données de la mémoire 4 vers une logique 5 de comparaison et de sélection. Cette logique 5 élimine les enregistrements des zones dont le premier emplacement contient x=0. Pour les zones de la ligne pour lesquelles x=1, la logique 5 compare les contenus respectifs des seconds emplacements au couple VPI-VCI présent dans l'en-tête de la cellule entrante. La zone pour laquelle x=1 et le second emplacement contient le bon couple VPI-VCI est finalement sélectionnée, et l'identité Id_Cx lue dans le troisième emplacement de cette zone est validée dans un registre de sortie de la logique 5. Ce registre de sortie est relié au multiplexeur 7 pour produire l'identité Id_Cx en temps utile (trois dernières lignes de la figure 4). Suivant la rapidité des composants de la logique 5, les comparaisons, ainsi que la lecture dans la mémoire 4, peuvent être effectuées soit séquentiellement pour les p enregistrements soit partiellement ou complètement en parallèle. Comme l'illustrent la première et la dernière ligne de la figure 4, l'insertion de l'identité Id_Cx avant le contenu de la cellule a pu être effectué en un temps inférieur à la période de l'horloge-cellule CKC.

D'autres accès dans la mémoire RAM 4 sont possibles dans les périodes repérées dans la sixième ligne de la figure 4. Ces périodes sont utilisées pour mettre à jour le contenu de la table, notamment lors de l'établissement et de la clôture de connexions virtuelles. Ces opérations n'étant pas soumises aux mêmes contraintes de rapidité que l'insertion des données devant les cellules entrantes, elles peuvent être exécutées de façon non critique sur un certain nombre de périodes.

A l'établissement d'une connexion virtuelle, un couple VPI-VCI est d'abord présélectionné, soit par le commutateur équipé conformément à l'invention soit par un autre équipement du réseau ATM. Un calcul de CRC est effectué sur la base du couple présélectionné pour obtenir un index de ligne H. Si les bits x contenus dans les premiers emplacements des p zones de la ligne H sont tous à 1, cette ligne ne contient plus de zone disponible, et il se produit un rejet du couple VPI-VCI présélectionné, ce qui conduit à en présélectionner un autre. Si une ou plusieurs zones de la ligne contiennent x=0 dans leurs premiers emplacements, cette zone, ou l'une de ces zones (par exemple la première), est sélectionnée et le couple présélectionné est adopté. La valeur du bit x contenu dans le premier emplacement de la zone sélectionnée est changée (x=1), le couple VPI-VCI adopté est écrit dans le second emplacement de cette zone, et son troisième emplacement reçoit l'identité correspondante Id_Cx qui lui est allouée par le processeur central du commutateur.

A la clôture d'une connexion virtuelle désignée par un couple VPI-VCI, l'index de ligne H est obtenu par un calcul de CRC, on identifie la zone de la ligne ainsi indexée dont le premier emplacement contient x=1 et le second emplacement contient le couple VPI-VCI en question, et on change la valeur du bit x de cette zone (x=0).

Le polynôme générateur G(X) de degré m employé dans les calculs de CRC est avantageusement de la forme G(X)= (1+X^{q}).P(X), où P(X) est un polynôme premier de degré r=m-q, L+m n'étant pas plus grand que le PPCM de q et de 2^{r}-1. Les index de ligne sont alors générés au moyen d'un code de Fire, ce qui s'avère commode pour les identificateurs VPI et VCI gérés par couples. En plus des propriétés précédemment évoquées, le code de Fire permet de détecter des erreurs se situant dans deux plages mobiles de L₁ bits et L₂ bits telles que L₁+L₂=q+1 et L₁≤min (q,r), comme illustré dans la partie inférieure de la figure 4.

Ainsi, si les plages de bits utilisées pour les VPI-VCI ne se limitent pas aux bits de poids les plus faibles (cas de la Recommandation I.361), mais sont au contraire quelconques de longueur q pour l'un des identificateurs et r pour l'autre, le calcul de CRC permettra de produire jusqu'à 2^{q+r} index de ligne tous distincts. Une table de p=2^{s} colonnes (s≥0) pourra alors accepter jusqu'à 2 ^{q+r+s} connexions virtuelles sans blocage.

A titre d'exemple numérique, on peut considérer le cas d'une table structurée comme illustré sur la figure 2 avec m=13 et p=6. Le polynôme générateur du code cyclique employé est par exemple G(X)=(1+X⁹) (X⁴+X+1), correspondant à un code de Fire avec q=9 et r=4 (L₁≤4, L₂=10-L₁). Avec cet exemple numérique :
- si les bits employés pour l'allocation des VPI-VCI sont distribués de manière aléatoire sur tous les 28 bits, la table ne présente qu'un taux de blocage de 0,0000010 pour 4096 connexions, et 0,000083 pour 8192 connexions, ce qui est encore acceptable. Avec une procédure d'allocation à deux essais, ce taux de blocage devient pratiquement nul ;
- supposons que 15 bits soient utilisés pour le choix des VPI-VCI, avec une plage de m=13 bits consécutifs de position quelconque, comprenant les bits de poids faibles de VPI et VCI, et s=2 bits arbitraires. La table 4 ne présentera alors aucun débordement (il suffirait même d'avoir p=4). Si les positions des s bits sont connues de l'équipement, ces s bits peuvent être utilisés comme index de colonne de la manière précédemment décrite, le stockage des VPI-VCI dans la table 4 étant alors inutile, de même que la logique de comparaison et de sélection 5. Si l'équipement ne connaît pas les positions des s bits, le stockage des VPI-VCI dans la table 4 et le mécanisme de comparaison et de sélection remplacent l'indexage des colonnes pour garantir l'absence de débordements ;
- si les plages de VPI et de VCI utilisées ne comprennent pas les bits de poids faible mais sont quelconques, avec une configuration de L₁=4 bits VPI consécutifs et L₂=6 bits VCI consécutifs (ou inversement), on définit jusqu'à 1024 index H distincts. Avec s=2 autres bits de positions arbitraires parmi les 28 bits VPI-VCI, on peut garantir 4096 connexions sans blocage.

On peut noter que le nombre L de bits du mot binaire soumis au codage cyclique peut dans certains cas être plus petit que le nombre Lₚ+L_{c} de bits de la séquence VPI-ICV sans que les performances du procédé en soient affectées. Ainsi, dans l'exemple précédent où L_{c}=16, Lₚ=12 et m=13, les trois bits de poids les plus forts du VCI peuvent être exclus de la séquence VPI-ICV pour former le mot soumis au codage cyclique, sans perdre la propriété de garantir 2^{m} index de ligne différents pour 2^{m} couples VPI-VCI alloués conformément à la Recommandation I.361. Dans le cas d'une allocation aléatoire, l'omission de quelques bits (L<Lₚ+L_{c}) ne conduit qu'à un nombre minime de blocages si le nombre de colonnes de la table 4 est convenablement choisi.

## Revendications

1. Procédé pour associer des données à des cellules ATM parvenant à un équipement de réseau ATM selon des connexions virtuelles, comprenant, a l'établissement de chacune des connexions virtuelles, l'adoption d'un couple d'identificateurs comportant un identificateur de conduit virtuel (VPI) de Lₚ bits et un identificateur de voie virtuelle (VCI) de L_{c} bits, et la mémorisation, dans une table (4) de l'équipement, de données (Id_Cx) se rapportant à ladite connexion virtuelle en relation avec son couple d'identificateurs, et comprenant d'autre part, à l'arrivée de chaque cellule ATM dont l'en-tête inclut le couple d'identificateurs de l'une des connexions virtuelles, la lecture dans la table de données se rapportant à ladite connexion virtuelle, **caractérisé en ce que** la table (4) comporte p.2^{m} zones de mémorisation organisées en 2^{m} lignes et p colonnes, m et p étant des entiers au moins égaux à 1, et **en ce que** les données se rapportant à une connexion virtuelle sont stockées dans une zone de la table dont la ligne est repérée par un index de m bits calculé par application d'un code cyclique systématique, dont le polynôme générateur est de degré m, à un mot binaire extrait d'une séquence (VPI-ICV) de Lₚ+L_{c} bits constituée par les bits de l'un des identificateurs du couple adopté pour ladite connexion virtuelle, rangés en ordre de poids décroissants, suivis par les bits de l'autre identificateur dudit couple, rangés en ordre de poids croissants.

2. Procédé selon la revendication 1, dans lequel le code cyclique a un polynôme générateur G(X) de la forme G(X)=(1+X^{q}).P(X), où P(X) est un polynôme premier de degré r, et q et r sont des entiers plus grands que 0 tels que q+r=m et L+m n'est pas plus grand que le plus petit commun multiple de q et de 2^{r}-1, L désignant le nombre de bits dudit mot binaire.

3. Procédé selon la revendication 2, dans lequel L≤28, q=9 et r=4.

4. Procédé selon l'une quelconque des revendications 1 à 3, dans lequel chaque zone de mémorisation de la table (4) comporte un premier emplacement contenant un bit (x) ayant une première valeur si ladite zone contient des données (Id_Cx) se rapportant à une connexion virtuelle établie, et une seconde valeur si ladite zone ne contient pas de données se rapportant à une connexion virtuelle établie.

5. Procédé selon la revendication 4, dans lequel chaque zone de mémorisation de la table (4) comporte un second emplacement pour recevoir le couple d'identificateurs (VPI-VCI) d'une connexion virtuelle à laquelle se rapportent des données mémorisées dans ladite zone.

6. Procédé selon la revendication 5, dans lequel le nombre p de colonnes de la table (4) est plus grand que 1, et comprenant les étapes suivantes à l'établissement d'une connexion virtuelle
/a/ la présélection d'un couple d'identificateurs (VPI-VCI);
/b/ la calcul de l'index de ligne (H) relatif au couple présélectionné ;
/c/ le retour à l'étape /a/ si les bits (x) contenus dans les premiers emplacements respectifs des p zones de la ligne de la table (4) repérée par l'index calculé ont tous la première valeur ;
/d/ l'adoption du couple présélectionné si un bit contenu dans le premier emplacement d'au moins une des p zones de la ligne de la table repérée par l'index calculé a la seconde valeur, et la sélection d'une telle zone pour la connexion ; et
/e/ le changement de la valeur du bit contenu dans le premier emplacement de la zone sélectionnée, l'écriture du couple d'identificateurs adopté dans le second emplacement de la zone sélectionnée, et l'écriture des données à mémoriser dans la zone sélectionnée.

7. Procédé selon la revendication 6, comprenant les étapes suivantes à l'arrivée de chaque cellule ATM dont l'en-tête inclut le couple d'identificateurs (VPI-VCI) de l'une des connexions virtuelles :
- le calcul de l'index de ligne relatif au couple d'identificateurs inclus dans l'en-tête de ladite cellule ; et
- la lecture de données stockées dans une zone de mémorisation de la ligne repérée par l'index calculé, dont le premier emplacement contient un bit (x) ayant la première valeur et dont le second emplacement contient un couple d'identificateurs qui coïncide avec celui inclus dans l'en-tête de ladite cellule.

8. Procédé selon l'une quelconque des revendications 1 à 5, dans lequel la table (4) comporte une seule colonne.

9. Procédé selon l'une quelconque des revendications 1 à 5, dans lequel le nombre p de colonnes de la table (4) est égal à 2^{s}, s étant un entier au moins égal à 1, et dans lequel les données (Id_Cx) se rapportant à une connexion virtuelle sont stockées dans une zone de la table dont la colonne est repérée par un index défini par s bits de positions prédéterminées du couple d'identificateurs (VPI-VCI) de ladite connexion virtuelle.

## Claims

1. A method for associating data with ATM cells reaching an item of ATM network equipment via virtual connections, comprising, when establishing each of the virtual connections, the adoption of a pair of identifiers comprising a virtual path identifier (VPI) of Lₚ bits and a virtual channel identifier (VCI) of L_{c} bits, and the storage, in a table (4) of the item of equipment, of data (Id_Cx) relating to said virtual connection in relation to the identifier pair thereof, and further comprising, at the arrival of each ATM cell whose header includes the identifier pair of one of the virtual connections, the reading from the table of data relating to said virtual connection, **characterized in that** the table (4) includes p.2^{m} storage areas organized as 2^{m} rows and *p* columns, *m* and *p* being integers at least equal to 1, and **in that** the data relating to a virtual connection are stored in an area of the table whose row is labelled by an m-bit index calculated by applying a systematic cyclic code, having a generating polynomial of degree m, to a binary word extracted from a sequence (VPI-ICV) of Lₚ+L_{c} bits which consists of the bits of one of the identifiers of the pair adopted in respect of said virtual connection, arranged in order of decreasing significance, followed by the bits of the other identifier of said pair, arranged in order of increasing significance.

2. A method according to Claim 1, wherein the cyclic code has a generating polynomial G(X) of the form G(X)=(1+X^{q}).P(X), where P(X) is a prime polynomial of degree *r*, and *q* and *r* are integers greater than 0 such that q+r=m and L+m is not larger than the least common multiple of *q* and of 2^{r}-1, L denoting the number of bits of said binary word.

3. A method according to Claim 2, wherein L≤28, q=9 and r=4.

4. A method according to any one of Claims 1 to 3, wherein each storage area of the table (4) includes a first location containing a bit (x) having a first value if said area contains data (Id_Cx) relating to an established virtual connection, and a second value if said area does not contain data relating to an established virtual connection.

5. A method according to Claim 4, wherein each storage area of the table (4) includes a second location for receiving the identifier pair (VPI-VCI) of a virtual connection to which data stored in said area relate.

6. A method according to Claim 5, wherein the number *p* of columns of the table (4) is larger than 1, and comprising the following steps at the establishment of a virtual connection :
/a/ preselecting an identifier pair (VPI-VCI) ;
/b/ calculating the row index (H) relating to the preselected pair ;
/c/ returning to step /a/ if the bits (x) contained in the first respective locations of the *p* areas of the row of the table (4) labelled by the calculated index all have the first value ;
/d/ adopting the preselected pair if a bit contained in the first location of at least one of the *p* areas of the row of the table labelled by the calculated index has the second value, and selecting such an area for the connection ; and
/e/ changing the value of the bit contained in the first location of the selected area, writing the identifier pair adopted to the second location of the selected area, and writing the data to be stored to the selected area.

7. A method according to Claim 6, comprising the following steps at the arrival of each ATM cell whose header includes the identifier pair (VPI-VCI) of one of the virtual connections:
- calculating the row index relating to the identifier pair included in the header of said cell; and
- reading the data stored in a storage area of the row labelled by the calculated index, the first location of which contains a bit (x) having the first value and the second location of which contains an identifier pair which coincides with that included in the header of said cell.

8. A method according to any one of Claims 1 to 5, wherein the table (4) includes a single column.

9. A method according to any one of Claims 1 to 5, wherein the number *p* of columns of the table (4) is equal to 2^{s}, *s* being an integer at least equal to 1, and wherein the data (Id_Cx) relating to a virtual connection are stored in an area of the table whose column is labelled by an index defined by s bits with predetermined positions of the identifier pair (VPI-VCI) of said virtual connection.

## Patentansprüche

1. Verfahren zum Zuordnen von Daten zu an einer ATM-Netzeinrichtung über virtuelle Verbindungen eintreffenden ATM-Zellen, welches bei Einrichtung einer jeden der virtuellen Verbindungen die Einführung eines Paars von Identifikatoren, welche einen virtuellen Pfadidentifikator (VPI) von Lₚ Bits und einen virtuellen Kanalidentifikator (VCI) von L_{c} Bits umfassen, und die Speicherung, in einer Tabelle (4) der Einrichtung, von Daten (Id_Cx), die sich auf die virtuelle Verbindung in Beziehung mit ihren Paar von Identifikatoren beziehen, umfasst, und das andererseits beim Eintreffen jeder ATM-Zelle, deren Header das Paar von Identifikatoren einer der virtuellen Verbindungen umfasst, das Lesen von diese virtuelle Verbindung betreffenden Daten in der Tabelle umfasst, **dadurch gekennzeichnet, dass** die Tabelle (4) p.2^{m} in 2^{m} Zeilen und p Spalten organisierte Speicherzonen umfasst, wobei m und p ganze Zahlen und wenigstens gleich 1 sind, und dass die eine virtuelle Verbindung betreffenden Daten in einer Zone der Tabelle gespeichert werden, deren Zeile durch einen Index von m Bits bezeichnet ist, der durch Anwendung eines systematischen zyklischen Codes, dessen Generatorpolynom vom Grad m ist, auf ein Binärwort erhalten wird, das aus einer Folge (VPI-ICV) von Lₚ+L_{c} Bits erhalten wird, das durch die Bits eines der Identifikatoren des für die virtuelle Verbindung verwendeten Paars, geordnet nach abnehmendem Gewicht, gefolgt von den Bits des anderen Identifikators des Paars, geordnet nach zunehmendem Gewicht, gebildet wird.

2. Verfahren nach Anspruch 1, bei dem der zyklische Code ein Generatorpolynom G(X) der Form G(X)=(1+X^{q}).P(X) hat, wobei P(X) ein erstes Polynom vom Grad r ist und q und r ganze Zahlen und größer als 0 sind, derart, dass q+r=m und 1+m nicht größer ist als das kleinste gemeinsame Vielfache von q und 2^{r}-1, wobei L die Zahl der Bits des Binärworts bezeichnet.

3. Verfahren nach Anspruch 2, bei dem L≤28, q=9 und r=;4.

4. Verfahren nach einem beliebigen der Ansprüche 1 bis 3, bei dem jede Speicherzone der Tabelle (4) einen ersten Platz aufweist, der ein Bit (x) enthält, das einen ersten Wert aufweist, wenn die Zone sich auf eine etablierte virtuelle Verbindung beziehende Daten (Id_Cx) enthält, und das einen zweiten Wert aufweist, wenn die Zone keine sich auf eine etablierte virtuelle Verbindung beziehenden Daten enthält.

5. Verfahren nach Anspruch 4, bei dem jede Speicherzone der Tabelle (4) einen zweiten Platz zum Aufnehmen des Paars von Identifikatoren (VPI-VCI) einer virtuellen Verbindung aufweist, auf die sich die in der Zone gespeicherten Daten beziehen.

6. Verfahren nach Anspruch 5, bei dem die Zahl p von Spalten der Tabelle (4) größer als 1 ist, und welches nach Etablieren einer virtuellen Verbindung die folgenden Schritte umfasst:
/a/ die Vorauswahl eines Paars von Identifikatoren (VPI-VCI);
/b/ die Berechnung des auf das vorausgewählte Paar bezogenen Zeilenindex (H) ;
/c/ die Rückkehr zu Schritt /a/, wenn die an den jeweiligen ersten Plätzen der p Zonen der mit dem berechneten Index bezeichneten Zeile der Tabelle enthaltenen Bits alle den ersten Wert haben;
/d/ die Einführung des vorgewählten Paars, wenn ein am ersten Platz wenigstens einer der p Zonen der mit dem berechneten Index bezeichneten Zeile der Tabelle enthaltenes Bit den zweiten Wert hat, und Auswählen einer solchen Zone für die Verbindung; und
/e/ das Ändern des Werts des am ersten Platz der ausgewählten Zone enthaltenen Bits, das Schreiben des eingeführten Paars von Identifikatoren an den zweiten Platz der ausgewählten Zone, und das Schreiben der zu speichernden Daten in die ausgewählte Zone.

7. Verfahren nach Anspruch 6, mit den auf die Ankunft jeder ATM-Zelle, deren Header das Paar von Identifikatoren (VPI-VCI) einer der virtuellen Verbindungen enthält, folgenden Schritten:
- Berechnen des Zeilenindex relativ zu dem im Header der Zelle enthaltenen Identifikatorpaar; und
- Lesen der in einer Speicherzone der mit dem berechneten Index bezeichneten Zeile gespeicherten Daten, deren erster Platz ein Bit (x) mit dem ersten Wert enthält, und deren zweiter Platz ein Paar von Identifikatoren enthält, das mit dem im Header der Zelle enthaltenen übereinstimmt.

8. Verfahren nach einem beliebigen der Ansprüche 1 bis 5, bei dem die Tabelle (4) eine einzige Spalte umfasst.

9. Verfahren nach einem beliebigen der Ansprüche 1 bis 5, bei dem die Zahl p von Spalten der Tabelle (4) gleich 2^{s} ist, wobei s eine ganze Zahl und wenigstens gleich 1 ist, und bei dem die sich auf eine virtuelle Verbindung beziehenden Daten (Id_Cx) in einer Zone der Tabelle gespeichert werden, deren Spalte durch einen durch s Bits von vorgegebenen Positionen des Identifikatorpaars (VPI-VCI) der virtuellen Verbindung definierten Index bezeichnet ist.
